# EUROPEAN PATENT APPLICATION

(11) **EP 2 985 726 A1**
(43) Date of publication of application: **17.02.2016**
(21) Application number: 15180422.6
(22) Date of filing: 10.08.2015
(51) Int. Cl.: G06Q 30/02, G06Q 20/34

(54) **INFORMATION PROCESSING APPARATUS AND METHOD FOR UPDATING POINT BY THE SAME**

(30) Priority: 11.08.2014 JP 2014163646
(71) Applicant: Toshiba TEC Kabushiki Kaisha, Tokyo 141-0032 (JP)
(72) Inventor: ITO, Tadashil, Shinagawa-ku, Tokyo 141-0032 (JP)
(74) Representative: Takeuchi, Maya

(57) **Abstract**

An information processing apparatus comprises a reception module which receives points calculated according to the sales amount of a commodity, a reading module which reads electronic money identification information for identifying electronic money from an electronic money storage medium, an identification information reading module which reads, through a correspondence storage module in which member identification information for identifying a point member is associated with the electronic money identification information used by the point member, the member identification information corresponding to the electronic money identification information, a point reading module which reads, from a point storage module in which accumulated point of each point member is associated with the member identification information, the accumulated point corresponding to the member identification information, and a point updating module which adds points received by the reception module to the accumulated point to update the accumulated point of the member.

## Description

### CROSS-REFERENCE TO RELATED APPLICATION

This application is based upon and claims the benefit of priority from Japanese Patent Application No. 2014-163646, filed August 11, 2014, the entire contents of which are incorporated herein by reference.

### FIELD

Embodiments described herein relate to an information processing apparatus and a method for updating point by the information processing apparatus.

### BACKGROUND

In a shopping mall or department store where a plurality of tenants is located, a point management system is provided which stores or accumulates member point commonly valid or usable within the shopping mall or department store. The information system developer sets a point master file in a tenant management server to record the point accumulated or used in each store, thereby comprehensively managing shopping points (member points). On the other hand, in a checkout counter, a Point of Sales (POS) terminal reads a member number from a member card and inquires the present valid point of the member card to the tenant management server.

In recent years, electronic money for transportation systems has been widely used for a settlement in a commercial facility such as a station building. Electronic money identification information (an electronic money ID) for identifying the user of electronic money is stored in an electronic money storage medium such as an IC card or a portable digital assistance in which an IC-chip is built. A POS terminal reads the electronic money ID from the electronic money storage medium in a non-contact read/write manner for a settlement. A technology has been developed for use by a commodity data processing apparatus which uses such an electronic money ID as identification information of the foregoing member points.

However, the conventional point management system is incapable of using existing point master file and disenables a customer registering an electronic money ID to additionally use the electronic money ID for point management and therefore can be improved further.

To this end, there is provided an information processing apparatus, comprising:
a reception module configured to receive points calculated according to the sales amount of a commodity;
a reading module configured to read electronic money identification information for identifying electronic money from an electronic money storage medium;
an identification information reading module configured to read, through a correspondence storage module in which member identification information for identifying a point member is uniquely associated with the electronic money identification information used by the point member, the member identification information corresponding to the electronic money identification information read by the reading module;
a point reading module configured to read, from a point storage module in which accumulated point of each point member is uniquely associated with the member identification information, the accumulated point corresponding to the member identification information read by the identification information reading module; and
a point updating module configured to add points received by the reception module to the accumulated point read by the point reading module to update the accumulated point of the member.

Preferably, the information processing apparatus further comprises:
a coupon issuing module configured to carry out a coupon issuing processing to output data relating to an coupon corresponding to accumulated point if the accumulated point updated by the point updating module reach a given value.

Preferably still, the information processing apparatus further comprises:
a virtual point output module configured to output, if the electronic money identification information read by the reading module is not registered in the correspondence storage module, points corresponding to the sales amount of commodity as a virtual point that are given to a point member if a customer were the point member.

Preferably yet, the information processing apparatus further comprises:
an inquiry reception module configured to receive an instruction for inquiring the accumulated point stored in the point storage module, wherein

if the reading module reads the electronic money identification information while the inquiry reception module does not receive the instruction, then the point updating module adds points corresponding to the sales amount of the commodity to the accumulated point read by the point reading module to update the accumulated point in the point storage module.

Suitably, the electronic money storage medium stores the accumulated point of the point member together with the electronic money identification information;
the point reading module reads the accumulated point from the electronic money storage medium together with the electronic money identification information; and
the point updating module adds the points corresponding to the sales amount of the commodity to the accumulated point to update the accumulated point stored in the electronic money storage medium.

The invention also relates to a method for updating point by an information processing apparatus having a reception module, a correspondence storage module, a reading module, a point storage module, and an identification information reading module, including:
receiving points calculated according to the sales amount of a commodity by a reception module;
reading electronic money identification information for identifying electronic money from an electronic money storage medium;
reading, through a correspondence storage module in which member identification information for identifying a point member is uniquely associated with the electronic money identification information used by the point member, the member identification information corresponding to the electronic money identification information read by a reading module;
reading, from a point storage module in which accumulated point of each point member is uniquely associated with the member identification information, the accumulated point corresponding to the member identification information read by an identification information reading module; and
adding points received by the reception module to the accumulated point read from the point storage module to update the accumulated point of the member.

### DESCRIPTION OF THE DRAWINGS

The above, and other objects, features and advantages of the present invention will be made apparent from the following description of the preferred embodiments, given as non-limiting examples, with reference to the accompanying drawings, in which:
Fig. 1 is a diagram illustrating the general structure of a point management system according to an embodiment;
Fig. 2 is a block diagram illustrating the hardware structure of a store server;
Fig. 3 is a block diagram illustrating the hardware structure of a tenant management server;
Fig. 4 is a schematic diagram exemplifying the data structure of a point master file;
Fig. 5 is a diagram exemplifying the data structure of an ID correspondence master file;
Fig. 6 is a block diagram illustrating the functional structure of a POS terminal;
Fig. 7 is a diagram exemplifying a receipt printed for a point card member;
Fig. 8 is a diagram exemplifying a receipt printed for a non-point card member; and
Fig. 9 is a flowchart illustrating the steps of a point management processing carried out by the POS terminal.

### DETAILED DESCRIPTION

In accordance with an embodiment, an information processing apparatus comprises a reception module, a reading module, an identification information reading module, a point reading module and a point updating module. The reception module receives points calculated according to the sales amount of a commodity. The reading module reads electronic money identification information for identifying electronic money from an electronic money storage medium. The identification information reading module reads, through a correspondence storage module in which member identification information for identifying a point member is uniquely associated with the electronic money identification information used by the point member, the member identification information corresponding to the electronic money identification information read by the reading module. The point reading module reads, from a point storage module in which accumulated point of each point member is uniquely associated with the member identification information, the accumulated point corresponding to the member identification information read by the identification information reading module. The point updating module adds points received by the reception module to the accumulated point read by the point reading module to update the accumulated point of the member.

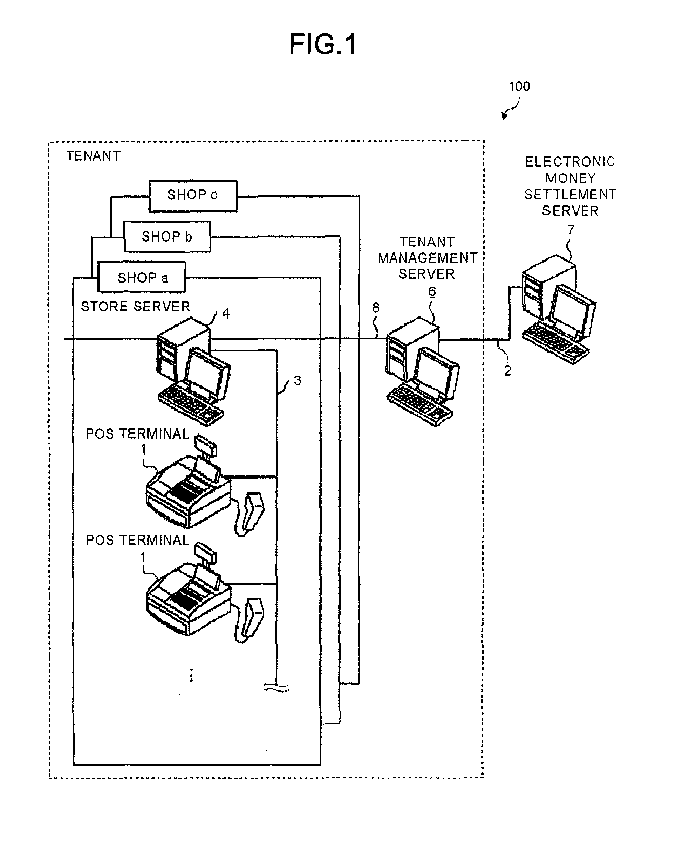

Fig. 1 is a diagram illustrating the general structure of a point management system 100 according to a present embodiment. A shopping mall or a department store has a plurality of shops a-c as tenants. At least one POS terminal 1 is installed in each shop as a sales data processing apparatus for registering the sales of commodities. Further, although a plurality of POS terminals 1 is connected with a store server 4 in the example shown in Fig. 1, no specific limitations are given to the number of the POS terminals 1 used in a shop.

Moreover, although it is described in the present embodiment that a POS terminal 1 is used as an information processing apparatus, a multi-information terminal having the same functions as the POS terminal 1 may also be used as a sales data processing apparatus. The multi-information terminal refers to an information terminal which is equipped with a display device, an input device, a communication interface, a card reader/writer and a printer to execute a sales registration processing like a POS terminal 1 or a display processing like a digital signage.

The store server 4 collectively manages data received from the POS terminal 1 and other data to carry out a sales management, an inventory management and an expense management for a shop. The store server 4 and the POS terminal 1 are connected via a connection line such as a Local Area Network 3 established in the shop. The store server 4 is connected with a tenant management server 6 via a dedicated line 8.

The tenant management server 6 manages the sales and stocks of a plurality of shops as well as the points commonly valid in the plurality of shops. The tenant management server 6 is connected with an electronic money settlement server 7 via a dedicated line 2. The electronic money settlement server 7 manages an electronic money based settlement processing. Further, the functions of the electronic money settlement server 7 may also be achieved by a plurality of server devices connected with each other via a network.

The POS terminal 1 receives a payment with electronic money through the data communication with the electronic money storage medium. Moreover, the POS terminal 1 sends settlement information including electronic money identification information, a payment amount, shop information and the like to the electronic money settlement server 7 via the store server 4 and the tenant management server 6. Further, the POS terminal 1 calculates the number of points given to the member according to the sales amount calculated for a settlement and sends the calculated points to the tenant management server 6.

Next, the functional structure of each device is described.

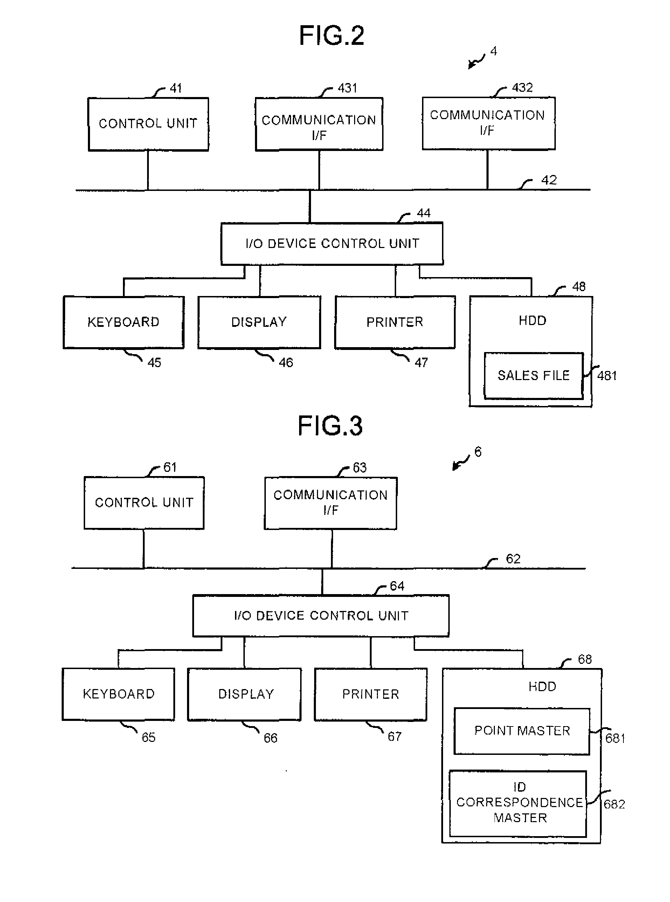

The store server 4 is described first. Fig. 2 is a block diagram illustrating the hardware structure of the store server 4. The store server 4 comprises a control unit 41 having the structure of a computer provided with a CPU, a ROM and a RAM. A keyboard 45, a display 46, a printer 47 and a Hard Disk Drive (HDD) 48 are connected with the control unit 41 via a bus line 42 and an I/O device control unit 44.

The control unit 41 carries out a data communication with the POS terminal 1 via a communication I/F (interface) 431 and the LAN 3 and also data communication with the tenant management server 6 via a communication I/F 432 and the dedicated line 8. Further, the control unit 41 requests the tenant management server 6 to send various data to control unit 41 in response to the request by the POS terminal 1. Then, the control unit 41 sends the data received from the tenant management server 6 to the POS terminal 1 which requests the data.

In addition to various control programs for activating the CPU of the control unit 41, a sales file 481 is also stored in the HDD 48. The sales file 481 records the sales data of a shop. The store server 4 stores the sales data in the sales file 481 sent from the POS terminal 1 installed in the shop. Next, the tenant management server 6 is described. Fig. 3 is a block diagram illustrating the hardware structure of the tenant management server 6. The tenant management server 6 comprises a control unit 61 having the structure of a computer provided with a CPU, a ROM and a RAM. A keyboard 65, a display 66, a printer 67 and a Hard Disk Drive (HDD) 68 are connected with the control unit 61 via a bus line 62 and an I/O device control unit 64. The control unit 61 carries out a data communication with the store server 4 via a communication I/F 63 and the dedicated line 8.

In addition to various control programs for activating the CPU of the control unit 61, a point master file 681 (a point storage device) and an ID correspondence master file 682 (correspondence storage device) are also stored in the HDD 68. The control unit 61 of the tenant management server 6 sends, according to a data acquisition requirement, the various data stored in the point master file 681 or the ID correspondence master file 682 to the POS terminal 1 via the store server 4. Further, instead of being stored in the same server, the point master file 681 and the ID correspondence master file 682 may be stored in different storage devices or different servers.

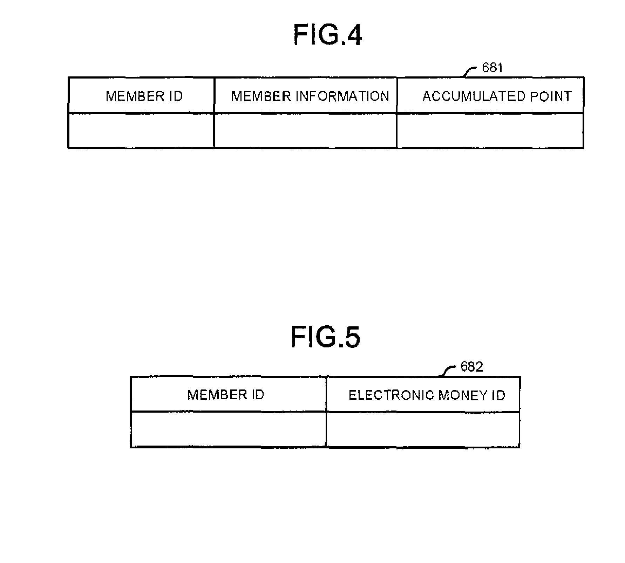

Fig. 4 is a schematic diagram exemplifying the data structure of the point master file 681. As shown in Fig. 4, in the point master file 681, the member ID (a member identifier) of a point member, member information such as the member name or contact information of the point member and the accumulated points of the point member are associated with one another.

Fig. 5 is a diagram exemplifying the data structure of the ID correspondence master file 682. A point member applies the additional use of an electronic money ID (electronic money identifier) as shopping point identification information through a registration paper or a Web page for registration. The manager of the tenant management server 6 associates the member ID and the electronic money ID of the applicant according to the content of the application to register the member ID and the electronic money ID associated in the ID correspondence master file 682. Further, the data in the point master file 681 may be merged with that in the ID correspondence master file 682 in the same database for management.

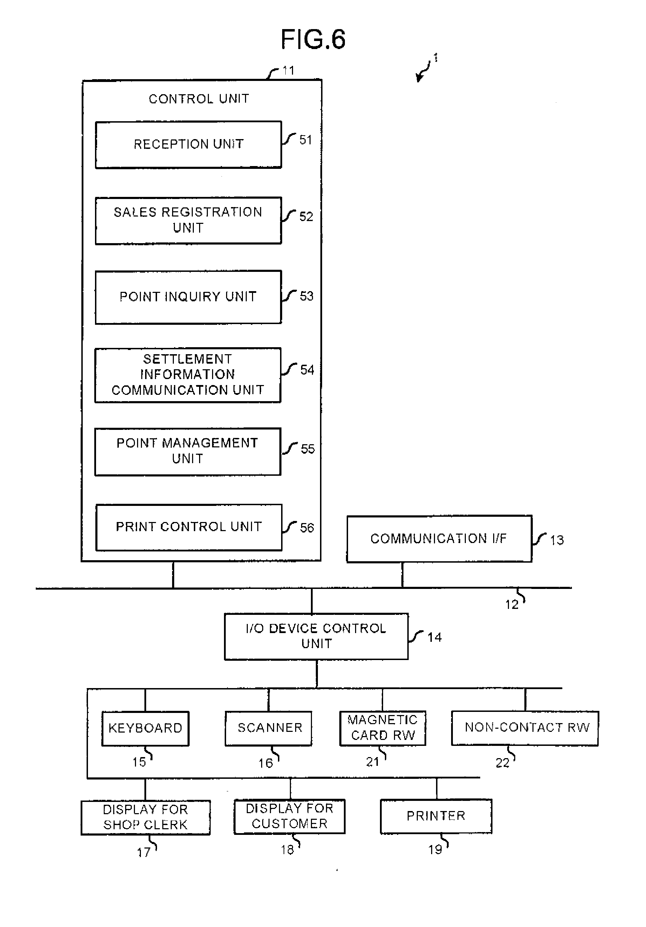

Next, the POS terminal 1 is described. Fig. 6 is a block diagram illustrating the functional structure of the POS terminal 1. The POS terminal 1 comprises a control unit 11 having the structure of a computer including a CPU, a ROM and a RAM. A keyboard 15, a scanner 16, a display for shop clerk 17, a display for customer 18, a printer 19, a magnetic card reader/writer 21 and a non-contact reader/writer 22 are connected with the control unit 11 via a bus line 12 and an I/O device control unit 14. A point inquiry key (inquiry reception device) for inquiring accumulated or valid points is arranged on the keyboard 15.

The magnetic card reader/writer 21 reads/writes data from/into a magnetic storage type point card. Further, not limited to be a magnetic storage type, the point card may be a card of another storage type. In this case, a magnetic card reader/writer (point card reader/writer) capable of reading/writing data from/to the point card with the type different from the storage type is used. The non-contact reader/writer 22 reads/writes data from/into a non-contact IC card or a portable electronic device carrying a non-contact IC chip.

The control unit 11 carries out a data communication with the store server 4 via a communication I/F 13 and the LAN 3. The control unit 11 carries out a data communication with the tenant management server 6 via further the dedicated line 8. The control unit 11 carries out a data communication with the electronic money settlement server 7 via still further the dedicated line 2. The programs executed by the control unit 11 in the present embodiment are described below.

The programs executed by the POS terminal 1 of the present embodiment are pre-compiled in a ROM. The programs executed by the POS terminal 1 of the embodiment may be recorded in a computer-readable recording medium such as a CD-ROM, a Floppy Disk (FD), a CD-R, and a Digital Versatile Disk (DVD) as installable or executable files.

Further, the programs executed by the POS terminal 1 of the embodiment may be stored in a computer connected with a network such as the Internet and downloaded from the network. Alternatively, the programs executed by the POS terminal 1 of the embodiment may be provided or distributed by a network such as the Internet.

As shown in Fig. 6, the programs executed by the POS terminal 1 of the embodiment are modularized into a reception unit 51, a sales registration unit 52, a point inquiry unit 53, a settlement information communication unit 54, a point management unit 55 and a print control unit 56. To realize each unit, the CPU (processor) reads programs of the present embodiment from the memory medium (ROM) to load programs onto a main memory device. Then, the CPU executes the programs on the main memory device to generate the reception unit 51, the sales registration unit 52, the point inquiry unit 53, the settlement information communication unit 54, the point management unit 55 and the print control unit 56 on the main memory.

The reception unit 51 receives various inputs from the keyboard 15, the scanner 16, the magnetic card reader/writer 21 and the non-contact reader/writer 22. For example, the scanner 16 reads a code symbol affixed on a commodity. The reception unit 51 decodes the code symbol to read a commodity code represented with the code symbol.

Further, functioning as a reading module, the reception unit 51 receives an input of an electronic money ID if the electronic money ID is read by the non-contact reader/writer 22 from the electronic money storage medium, on the one hand, or an input of a member ID if the member ID is read by the magnetic card reader/writer 21 from a point card, on the other hand.

The sales registration unit 52 registers the sales of a commodity. The sales registration unit 52 reads, from a commodity master file (not shown), commodity information corresponding to the commodity code received by the reception unit 51. Moreover, when the 'closing' key or 'current total' key on the keyboard 15 is operated to settle a transaction, the sales registration unit 52 sends sales data containing commodity information and a total transaction amount to the store server 4. The control unit 41 of the store server 4 registers the received sales data in the sales file 481.

If the reception unit 51 receives an electronic money ID, then the point inquiry unit 53 (identification information reading module) reads a member ID corresponding to the electronic money ID from the ID correspondence master file 682. Moreover, the point inquiry unit 53 (point reading module) reads the accumulated points of the member ID from the point master file 681.

The point inquiry unit 53 inquires the accumulated point of the member corresponding to the member ID received by the reception unit 51 or the member ID read from the ID correspondence master file 682 to the point master file 681 of the tenant management server 6. For example, if the point inquiry key on the keyboard 15 is operated, the reception unit 51 receives the input of an electronic money ID or member ID, as stated above. Then, the point inquiry unit 53 inquires the accumulated point of the member corresponding to the received member ID or the member ID read from the ID correspondence master file 682 stated above to the tenant management server 6. The control unit 61 of the tenant management server 6 reads accumulated point from the point master file 681 in response to the inquiry and sends the result of the inquiry to the POS terminal 1 via the store server 4. The point inquiry unit 53 receives the result of the inquiry from the tenant management server 6 via the store server 4.

The settlement information communication unit 54 carries out various data communication needed for settlement with electronic money. For example, the settlement information communication unit 54 reads the balance of electronic money from the electronic money storage medium and sends the balance resulting from deducting the payment amount from the read balance to the electronic money storage medium if the balance is sufficient for a payment. Further, the settlement information communication unit 54 sends settlement information for an electronic money settlement to the electronic money settlement server 7. The settlement information may be a transaction number, a transaction date and time, shop information indicating the shop at which a transaction is carried out, an electronic money ID, a payment amount in electric money and a balance in electric money in an account.

The point management unit 55 manages the total valid points of each member using the point master file 681 and the ID correspondence master file 682 of the tenant management server 6. For example, the point management unit 55 calculates the points given to a point member according to the sales amount of commodities. Moreover, the calculated points are notified to the tenant management server 6 and added with the accumulated point in the point master file 681 to update the valid accumulated point.

Further, if the reception unit 51 receives input of 'use points', then the point management unit 55 notifies the number of points to be used to the tenant management server 6. The number of points notified is deducted from the accumulated point stored in the point master file 681 to update the accumulated point.

In this way, the point management unit 55 functions as a point update module. Further, if the non-contact reader/writer 22 reads an electronic money ID from the electronic money storage medium, then the point management unit 55 reads a member ID corresponding to the electronic money ID from the ID correspondence master file 682 to execute various point processing on the member ID.

The print control unit 56 controls the print operation of the printer 19 to issue a receipt. Besides the sales data generated by the sales registration unit 52, the data printed on the receipt further includes point-related information, depending upon whether the customer is a member or not.

If the customer is a member, then the print control unit 56 includes the added (given) points or used points calculated by the point management unit 55 in the data to be printed on a receipt. Point balance resulting from the addition or deduction of the calculated points is also included in the print data.

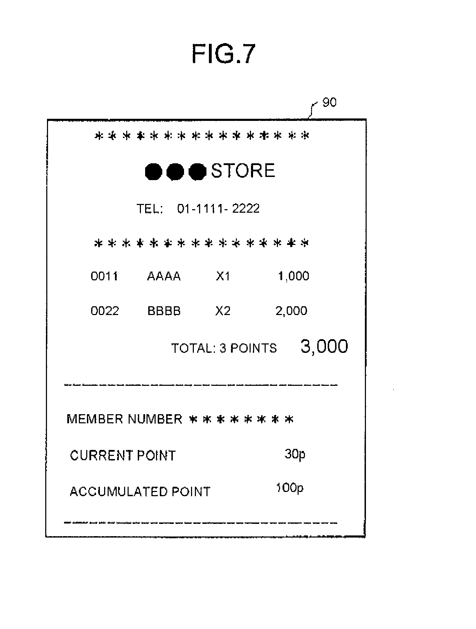

Fig. 7 is a diagram exemplifying a receipt 90 issued for a point member. If the electronic money ID received by the reception unit 51 is registered in the ID correspondence master file 682, then the customer is a point member. Further, if the member ID is received by the reception unit 51, then the customer is absolutely a point member. Thus, the print control unit 56 includes the points to be given (the current given points) calculated by the point management unit 55 in the print data to be printed on a receipt.

On the other hand, if the customer is not a member, then the print control unit 56 functions as a virtual point output module. If an electronic money ID, but not a member ID, is received by the reception unit 51 and the electronic money ID is not registered in the ID correspondence master file 682, then the print control unit 56 determines the customer as a non-registered member (non-member). The print control unit 56 includes the added points currently calculated by the sales registration unit 52 in the print data to be printed on a receipt as a virtual point that are given to the customer if the customer is a member.

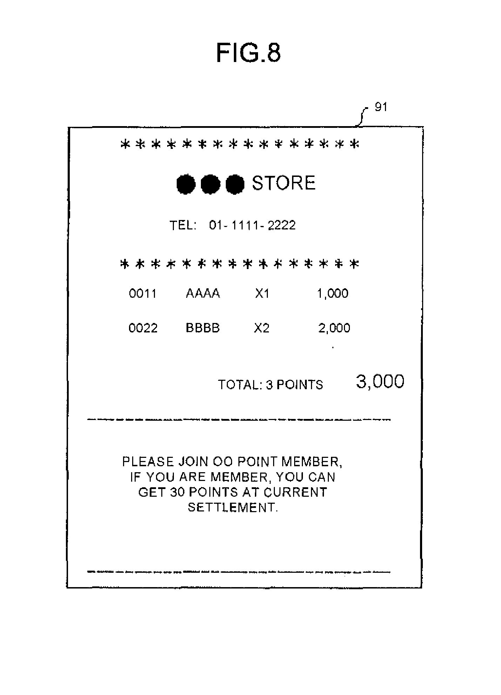

1. Fig. 8 is a diagram exemplifying a receipt 91 issued for a non-point member. As shown in Fig. 8, a message for offering to apply a point member is printed on the receipt 91. Further, the virtual point that is given to the customer for the shopping if the customer were a point member is printed. In this way, for a non-member, the POS terminal 1 automatically issues a receipt on which a message for inviting a point member and virtual point are printed. In this way, it can realize the invitation to a new member automatically without missing opportunity.

Returning to Fig. 6, the print control unit 56 functions as an inquiry result output module. As stated above, the point inquiry unit 53 receives the result of the inquiry, the print control unit 56 generates a print data of the accumulated point to print a point inquiry report (not shown) on a receipt according to the print data.

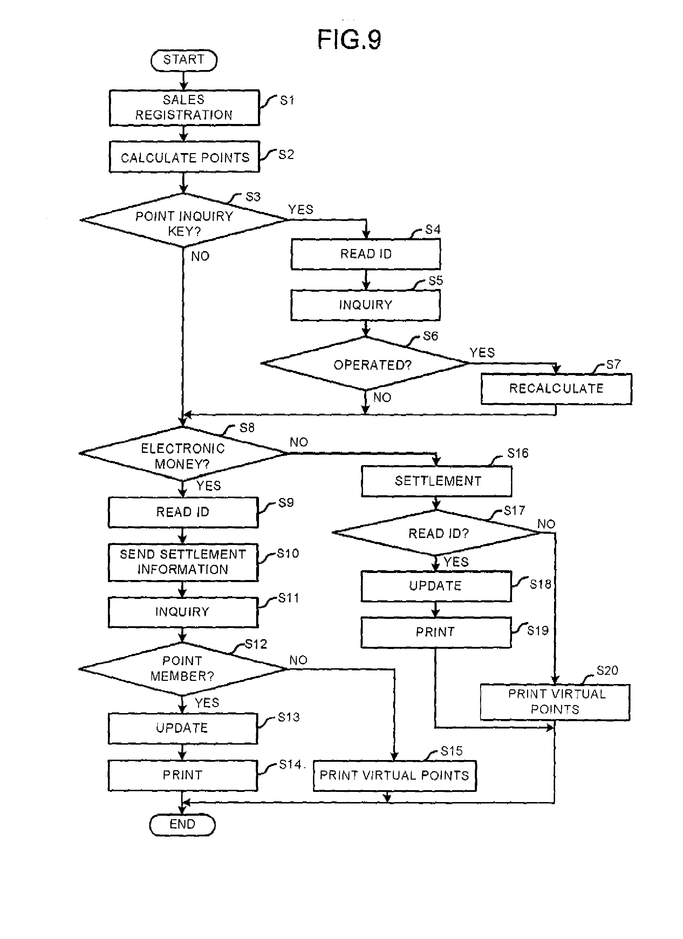

Next, a point management processing carried out by the POS terminal 1 is described. Fig. 9 is a flowchart illustrating the steps of a point management processing carried out by the POS terminal 1.

The sales registration unit 52 registers the sales of each commodity according to a commodity code received by the reception unit 51 (Act S1). If the 'current total' key (not shown) on the keyboard 15 is operated, then sales registration unit 52 calculates a total amount of one transaction. Further, the point management unit 55 calculates the points that are given to the customer this time according to the total amount (Act S2).

The reception unit 51 determines whether or not a "point inquiry" key (not shown) on the keyboard 15 is operated (Act S3). If the "point inquiry" key is operated (Act S3: Yes), and either of an electronic money ID and a member ID is read, the reception unit 51 receives one of the IDs input (Act S4). If the magnetic card reader/writer 21 reads a member ID from a point card, then the reception unit 51 receives the member ID input. On the other hand, if the non-contact reader/writer 22 reads an electronic money ID from an electronic money storage medium, then reception unit 51 reads, from the ID correspondence master file 682, a member ID corresponding to the electronic money ID to receive the member ID.

Moreover, the point inquiry unit 53 inquires accumulated point corresponding to the received member ID to the tenant management server 6 (Act S5). Next, the point management unit 55 determines whether or not a "point use" key (not shown) on the keyboard 15 is operated (Act S6). If the "point use" key is operated (Act S6: Yes), then the sales registration unit 52 deducts the amount of a discount caused by the use of points from the total amount and recalculates a payment amount for the customer (Act S7). If the "point use" key is not operated (Act S6: No), Act S8 is taken. If the "point inquiry" key is not operated in Act S3 (Act S3: No), Act S8 is taken as well.

The reception unit 51 determines whether or not an "electronic money selection" key (not shown) on the keyboard 15 for selecting the payment with electronic money is operated (Act S8). If the "electronic money selection" key is operated (Act S8: Yes), and the non-contact reader/writer 22 reads an electronic money ID, the reception unit 51 reads, from the ID correspondence master file 682, a member ID corresponding to the electronic money ID to receive the member ID (Act S9).

The settlement information communication unit 54 outputs settlement information including a transaction number, a transaction date and time, shop information, an electronic money ID and a total amount for one transaction to the electronic money settlement server 7 (Act S10). Further, the settlement information communication unit 54 calculates a new balance by deducting the total amount of the current transaction from the balance of electronic money. The settlement information communication unit 54 outputs the new balance to the electronic money storage medium through the non-contact reader/writer 22 to update the balance stored in the electronic money storage medium.

Sequentially, the point management unit 55 requests the tenant management server 6 to inquire points, using the member ID read in Act S9 (Act S11).

If the electronic money ID received from the POS terminal 1 is registered in the ID correspondence master file 682 (Act S12: Yes), then the control unit 61 of the tenant management server 6 responds to the request to send information indicating the accumulated point corresponding to the electronic money ID to the POS terminal 1. On the other hand, if the electronic money ID received from the POS terminal 1 is not registered in the ID correspondence master file 682 (Act S12: No), then the control unit 61 responds to the request to send information representing the non-registered member to the POS terminal 1.

The point management unit 55 of the POS terminal 1 carries out a point update processing or a virtual point output processing according to the response from the tenant management server 6 (Act S13-S15). If the customer is a point member (Act S12: Yes), then the accumulated point received from the tenant management server 6 are added with the points calculated in Act S2 for the current transaction to update the accumulated point. The updated accumulated point is sent to the tenant management server 6 (Act S13). Moreover, the print control unit 56 includes the updated accumulated point in the print data to be printed on a receipt and outputs the print data to issue a receipt as exemplified in Fig. 7 (Act S14).

On the other hand, if the customer is not a point member (Act S12: No), then the point management unit 55 outputs the points calculated in Act S2 for the current transaction to the print control unit 56 as a virtual point that are given if the customer were a member. The print control unit 56 includes the virtual point in the print data to be printed on a receipt and outputs the print data to the printer 19 to issue a receipt as exemplified in Fig. 8 (Act S15).

In Act S8, if the "electronic money selection" key is not operated (Act S8: No), then the settlement is performed with another payment method but not with electronic money (Act S16). The settlement processing is performed with well-known conventional method and is therefore not described here repeatedly. Next, the reception unit 51 determines whether or not a member ID is read by the magnetic card reader/writer 21 (Act S17). Apparently, an electronic money ID may also be read from the electronic money storage medium by the non-contact reader/writer 22 in Act S17. Although an electronic money ID is registered for member identification in the embodiment, there is a case in which the customer wants a payment method other than the electronic money, and thus, any other ID (electronic money ID or member ID) is also usable.

Moreover, the point management unit 55 updates the accumulated point in the point master file 681 (Act S18), using the ID read in Act S17 (Act S17: Yes). The print control unit 56 outputs the print data including the updated accumulated point to the printer 19 to issue a receipt as exemplified in Fig. 7 (Act S19). Further, if neither ID is received (Act 17: No), then the print control unit 56 issues a receipt, as exemplified in Fig. 8, on which the number of points calculated in Act S2 taken as a virtual point is printed through the printer 19 (Act S20).

As stated above, if the "point inquiry" key is not operated (Act S3: No), the POS terminal 1 automatically and sequentially carries out a settlement data communication processing (Act S10) and a point update processing (Act 13) only by reading an electronic money ID once (Act S8).

The conventional POS terminal reads an electronic money ID twice separately for a point inquiry and a settlement processing. As communication may be interrupted because of a crowded communication gateway, the processing stability and the processing efficiency are desired to be improved. Contrary to the above, the POS terminal 1 of the present embodiment can automatically and continuously carry out a settlement processing and a point update processing by reading an electronic money ID once. Thus, the processing steps of a point update processing are simplified according to the present embodiment.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

For example, the sales file 481, the point master file 681 and the ID correspondence master file 682 may be stored in another information processing apparatus different from the above-described information processing apparatus or may also be dispersively stored in a plurality of information processing apparatuses which are connected with a network.

Further, the electronic money storage medium may store the accumulated point of a point member together with an electronic money ID of the point member. In such arrangement, the non-contact reader/writer 22 may read the accumulated point together with the electronic money ID from the electronic money storage medium. Thus, the point inquiry step carried out in the tenant management server 6 can be eliminated, and the balance of points can be known regardless of the condition of a communication line.

No specific limitations are given to a method for utilizing points, i.e., method for returning to a point member as a cost of the points. The points may be used as all or part of a payment amount in a settlement, or a coupon may be printed on a receipt by the print control unit 56 if the number of points reaches a given value. If the accumulated point reaches a given value, the point management unit 55 determines that a coupon corresponding to the given value is issuable. The point management unit 55 reads data relating to coupon issuable from the storage device of the control unit 11, and then the issue of the coupon is instructed to the print control unit 56. As described above, the POS terminal 1 is capable of automatically printing and issuing a coupon issuable corresponding to the cost of points. Thus, the operations by the operator relating to an issue of a coupon, confirmation of points and confirmation to the customer are eliminated, and thus issue of a coupon can be timely performed.

Further, the POS terminal 1 is used as an example of the information processing apparatus of the present embodiment, however, the foregoing functional structure may be provided in another information processing apparatus such as the tenant management server 6 so that the another information processing apparatus carries out the foregoing processing. Further, in a case in which the POS terminal 1 calculates the number of points corresponding to the sales amount of commodities, the information processing apparatus only needs to be equipped with a reception module for receiving the points calculated by the POS terminal 1. Still further, in a case in which the POS terminal 1 is used as the information processing apparatus of the present embodiment, it should be appreciated that the POS terminal itself calculates the number of points, as described above; however, in this case, it may be considered that the calculated points are received by the point management unit 55 and that the POS terminal 1 is equipped with a reception module.

As stated above, in the present embodiment, since the ID correspondence master file 682 in which the member ID of a point member is uniquely linked to the electronic money ID of the same member is used, it can be carried out that a member ID corresponding to an electronic money ID is read to read a valid points and to update points corresponding to the member ID. While using the existing point master file, according to the present embodiment, the existing system can be easily transferred to a system capable of specifying a member with an electronic money ID.

Further, according to the present embodiment, since different IDs are linked with each other without modifying the point master file, the conventional point master file is applicable. Thus, a point processing can be carried out with either of a member ID and an electronic money ID, and the customer only needs to carry either of a point card and an electronic money storage medium for a settlement. Thus, convenience to the customer is further enhanced.

## Claims

1. An information processing apparatus, comprising:
a reception module configured to receive points calculated according to the sales amount of a commodity;
a reading module configured to read electronic money identification information for identifying electronic money from an electronic money storage medium;
an identification information reading module configured to read, through a correspondence storage module in which member identification information for identifying a point member is uniquely associated with the electronic money identification information used by the point member, the member identification information corresponding to the electronic money identification information read by the reading module;
a point reading module configured to read, from a point storage module in which accumulated point of each point member is uniquely associated with the member identification information, the accumulated point corresponding to the member identification information read by the identification information reading module; and
a point updating module configured to add points received by the reception module to the accumulated point read by the point reading module to update the accumulated point of the member.

2. The information processing apparatus according to claim 1, further comprising:
a coupon issuing module configured to carry out a coupon issuing processing to output data relating to an coupon corresponding to accumulated point if the accumulated point updated by the point updating module reach a given value.

3. The information processing apparatus according to claim 1 or 2, further comprising:
a virtual point output module configured to output, if the electronic money identification information read by the reading module is not registered in the correspondence storage module, points corresponding to the sales amount of commodity as a virtual point that are given to a point member if a customer were the point member.

4. The information processing apparatus according to any one of claims 1 to 3, further comprising:
an inquiry reception module configured to receive an instruction for inquiring the accumulated point stored in the point storage module, wherein
if the reading module reads the electronic money identification information while the inquiry reception module does not receive the instruction, then the point updating module adds points corresponding to the sales amount of the commodity to the accumulated point read by the point reading module to update the accumulated point in the point storage module.

5. The information processing apparatus according to any one of claims 1 to 4, wherein
the electronic money storage medium stores the accumulated point of the point member together with the electronic money identification information;
the point reading module reads the accumulated point from the electronic money storage medium together with the electronic money identification information; and
the point updating module adds the points corresponding to the sales amount of the commodity to the accumulated point to update the accumulated point stored in the electronic money storage medium.

6. A method for updating point by an information processing apparatus having a reception module, a correspondence storage module, a reading module, a point storage module, and an identification information reading module, including:
receiving points calculated according to the sales amount of a commodity by a reception module;
reading electronic money identification information for identifying electronic money from an electronic money storage medium;
reading, through a correspondence storage module in which member identification information for identifying a point member is uniquely associated with the electronic money identification information used by the point member, the member identification information corresponding to the electronic money identification information read by a reading module;
reading, from a point storage module in which accumulated point of each point member is uniquely associated with the member identification information, the accumulated point corresponding to the member identification information read by an identification information reading module; and
adding points received by the reception module to the accumulated point read from the point storage module to update the accumulated point of the member.
